Europäisches Patentamt

(19) European Patent Office

Office européen des brevets

(11) **EP 0 953 601 A1**

(12) **EUROPEAN PATENT APPLICATION**
published in accordance with Art. 158(3) EPC

(43) Date of publication:
03.11.1999 Bulletin 1999/44

(51) Int. Cl.$^6$: **C08L 33/06**, C08F 220/12, C08F 218/18, C09D 133/06

(21) Application number: 98900353.8

(22) Date of filing: 14.01.1998

(86) International application number:
PCT/JP98/00099

(87) International publication number:
WO 98/31747 (23.07.1998 Gazette 1998/29)

(84) Designated Contracting States:
DE

(30) Priority: 17.01.1997 JP 637597

(71) Applicant: DAISO CO., LTD.
Osaka-shi, Osaka 550-0002 (JP)

(72) Inventors:
• SHIMIZU, Yasumi
Kawanishi-shi, Hyogo 666 (JP)

• AOKI, Koji
Itami-shi, Hyogo 664 (JP)
• NAKAMURA, Seiji
Amagasaki-shi, Hyogo 661 (JP)

(74) Representative:
VOSSIUS & PARTNER
Siebertstrasse 4
81675 München (DE)

(54) **AQUEOUS EMULSION CONTAINING FINE PARTICLES OF CROSS-LINKED ALLYLIC COPOLYMER**

(57) A crosslinked allyl copolymer fine particle-containing aqueous emulsion having a polymerization degree of diallyl phthalate of at least 85 % and an average particle diameter of 200 nm or less, which is obtained by emulsion-copolymerizing (a) 10 to 40 % by weight of diallyl phthalate, (b) 0.1 to 15 % by weight of a hydroxyl group-containing vinyl monomer and (c) the balance of an acrylate ester of a monohydric alcohol having 1 to 8 carbon atoms, has good film formation properties.

EP 0 953 601 A1

## Description

FIELD OF THE INVENTION

The present invention relates to an emulsion of fine particle of a crosslinked allyl copolymer which is useful as a paint, a coating agent and an adhesive and is also useful as a filler or a resin modifier to be formulated in a resin, said emulsion itself having excellent film formation properties, said particles having a crosslinked structure inside the particle.

RELATED ART

A diallyl phthalate resin decorative sheet has hitherto been obtained by putting a decorative paper impregnated with a diallyl phthalate prepolymer on the surface of a substrate such as plywood, particle board, medium duty fiberboard (MDF) and slate and then integrating them by hot-press curing, and the decorative sheet has been used as a high-grade decorative sheet in a large number of fields. In that case, the used impregnated paper has been prepared by dissolving a resin composition based on a diallyl phthalate prepolymer in an organic solvent such as acetone, methyl ethyl ketone and toluene to make an impregnating liquid, impregnating a decorative paper with the impregnating liquid and drying the impregnated decorative paper.

However, in view of the environmental pollution or disruption, safety/sanitation, etc., a switch to a method using no organic solvent has recently been strongly desired. Besides, the above conventional method has the following drawbacks. That is, since the prepolymer is used as the major component of the resin composition, not only a large amount of a catalyst such as peroxide is required to solidify the resin in hot-press curing as the post step but also a comparatively long time is required to complete the polymerization, resulting in inferior productivity.

As the system using no organic solvent, patents relating to the emulsion polymerization of an ally monomer and vinyl monomers have already been disclosed, but suffer from various problems on film forming properties and the like.

In Japanese Patent Kokoku Publication No. 35914/1970, there is a description about emulsion polymerization wherein an unsaturated acid is added as an essential component for smoothly conducting the polymerisation reaction between a diallyl ester of a dibasic acid and an addition-polymerizable monomer. The amount of the unsaturated acid in this publication is as large as 5 to 20 % by weight based on the total monomer. However, the formulation of a large amount of the unsaturated acid causes a problem that the water resistance of the resulting polymer is inferior and is thus not favorable.

In Japanese Patent Kokoku Publication No. 49032/1977, film forming properties are achieved by emulsion-copolymerizing a mixture of monomers consisting of 30 to 90 mol-% (about 36 to 96 % by weight) of diallyl phthalate, 10 to 70 mol-% (about 3 to 64 % by weight) of acrylate ester and 0 to 60 mol-% (about 0 to 56 % by weight) of a vinyl monomer and terminating the emulsion polymerization at a polymerization degree of 40 to 90 % to intentionally leave the unreacted monomer so that its plasticizing effect is expressed. However, its processing operation has the problem that when the polymerization is terminated within this range, a radical initiator should be added later at the time of molding. Furthermore, the hot-press molding is required because the resulting coated film shows considerable shrinkage. In addition, there is no specific exemplification of the hydroxyl group-containing vinyl monomer as the above vinyl monomer.

In Japanese Patent Kokoku Publication No. 18475/1976, blocking resistance is imparted by emulsion-polymerizing 50 to 90 % by weight of diallyl phthalate and 10 to 50 % by weight of an acrylate in the presence of an anion-nonion amphoteric surfactant and blending the resulting polymer with another polymer emulsion. The polymerization degree in this prior art is in the range of 50 to 90 %, and this emulsion composition has no film forming properties in itself.

Japanese Patent Kokoku Publication No. 26294/1982 discloses an emulsion prepared by polymerizing diallyl phthalate singly or with other vinyl monomer at a polymerization degree of not less than 50 %, but there is the disadvantage that a large amount of an acrylate ester emulsion and a water-soluble polymer must be added to attain film forming properties. The only polymers described in the Examples therein are those with a polymerization degree of not more than 70 %.

Besides, Japanese Patent Kokoku Publication Nos. 6753/1977, 50072/1977, 31259/1976, and 28294/1978 contain a description of the diallyl phthalate/acrylate emulsion composition respectively, but in any of the publications the polymerization of diallyl phthalate is terminated during reaction so that the unreacted monomer remains to act as a binder among particles to confer the film forming properties on it. Therefore, it is necessary that the unreacted monomer should react again at the time of forming a coated film and a catalyst should be added to effect the hardening reaction.

Although Japanese Patent Laid-Open Publication No. 248199/1994 discloses a copolymer obtained by emulsion-polymerizing an α,β-ethylenically unsaturated monomer, a vinyl silane, and a monomer containing at least 2 ally groups, the presence of a silane group is essential for this prior art to attain the desired crosslink form.

SUMMARY OF THE INVENTION

The present invention provides a crosslinked copolymer fine particle-containing aqueous emulsion having good film forming properties, where diallyl phthalate can be substantially completely polymerized by the emulsion polymerization of a specific monomer composition even if none of the unreacted monomer is allowed to remain. The present invention also provides a crosslinked copolymer fine particle-containing aqueous emulsion which is useful not only in decorative sheets but also as a usual paint, a coating material and an adhesive as well as a resin modifier and fillers for resin, where a hydroxyl group-containing vinyl monomer is used as an essential copolymer component to permit the crosslink not only by an amino resin crosslinking agent but also by a blocked isocyanate compound crosslinking agent.

The present invention relates to a crosslinked allyl copolymer fine particle-containing aqueous emulsion having an average particle diameter of 200 nm or less, which is obtained by emulsion-copolymerizing a monomer comprising (a) 10 to 40 % by weight of diallyl phthalate, (b) 0.1 to 15 % by weight of a hydroxyl group-containing vinyl monomer and (c) the balance being an acrylate ester of a monohydric alcohol having 1 to 8 carbon atoms until the polymerization degree of diallyl phthalate (a) reaches at least 85 %. The present invention also relates to an emulsion composition comprising a crosslinking agent capable of reacting with a hydroxyl group and said emulsion.

Further, the present invention relates to crosslinked allyl copolymer particles obtained by drying the above emulsion.

DETAILED DESCRIPTION OF THE INVENTION

Diallyl phthalate (a) used in the present invention is a general term of ortho-, iso- and tere-compounds which are used singly or in combination thereof. Diallyl phthalate (a) is used in an amount of 10 to 40 % by weight, preferably 15 to 35 % by weight, more preferably 20 to 35 % by weight, based on the copolymer.

The hydroxyl group-containing vinyl monomer (b) is preferably acrylate or methacrylate esters of dihydric or more alcohols (namely, alcohols having at least two hydroxyl groups), allyl alcohols, methallyl alcohols, allyl ethers or methallyl ethers of dihydric or more alcohols. Examples of such acrylate or methacrylate esters of dihydric or more alcohols are 2-hydroxyethyl acrylate, 2-hydroxypropyl acrylate, 2-hydroxyethyl methacrylate, 2-hydroxypropyl methacrylate, 3-hydroxypropyl acrylate, 3-hydroxypropyl methacrylate, 2-hydroxybutyl acrylate, 2-hydroxybutyl methacrylate, 4-hydroxybutyl acrylate, 4-hydroxybutyl methacrylate, acrylic acid or methacrylic acid mono- or di-esters of glycerin, acrylic acid or methacrylic acid mono- or di-esters of trimethylolpropane and acrylic acid or methacrylic acid mono-, di- or triesters of pentaerythritol. The allyl ether or methallyl ether of dihydric or more alcohols includes 2-hydroxyethylallylether, 2-hydroxyethylmethallylether, 2-hydroxypropylallylether, 2-hydroxypropylmethallylether, 3-hydroxypropylallylether, 3-hydroxypropylmethallylether, 2-hydroxybutylallylether, 2-hydroxybutylmetallylether, 4-hydroxybutylallylether, 4-hydroxybutylmethallylether, mono- or diallylether or mono-or dimethallylether of glycerin, mono- or diallylether or mono- or dimethallylether of trimethylolpropane, mono-, di-, or triallylether or mono-, di, or trimethallylether of pentaerythritol.

Among these, particularly preferably used are 2-hydroxyethyl acrylate, 2-hydroxypropyl acrylate, 2-hydroxyethyl methacrylate, 2-hydroxypropyl methacrylate, allyl alcohol and methallyl alcohol. As the hydroxyl group-containing vinyl monomer (b), the above-enumerated monomers may be used singly or in combination thereof.

The amount of the hydroxyl group-containing vinyl monomer (b) is in the range of 0.1 to 15 % by weight, preferably 0.5 to 10 % by weight, more preferably 0.5 to 7 % by weight, based on the copolymer.

The acrylate ester (c) is an ester between a monohydric alcohol and an acrylic acid, and has no hydroxyl group. The number of carbon atoms in the monohydric alcohol ranges from 1 to 8. Preferable examples of acrylate ester (c) include methyl acrylate, ethyl acrylate, propyl acrylate, isopropyl acrylate, butyl acrylate, isobutyl acrylate, t-butyl acrylate, 2-ethylhexyl acrylate and octyl acrylate, and these may be used singly or in combination thereof. Even if methacrylic acid is used in place of acrylic acid as the acid component of the ester, a fine particle-containing aqueous emulsion having good film forming properties cannot be obtained. The amount of acrylate ester (c) blended is the balance remaining by subtracting 10 to 40 % by weight of the component (a) and 0.1 to 15 % by weight of the component (b).

As far as the film forming properties are not deteriorated, a part of the acrylate (c) may be replaced by other vinyl compounds, for example, esters of $\alpha,\beta$-unsaturated carboxylic acids, such as a methacrylate ester, an acrylate ester of a monohydric alcohol having 9 or more carbon atoms, maleate ester, fumarate ester, and itaconate ester; $\alpha,\beta$-unsaturated nitriles such as acrylonitrile and methacrylonitrile; vinyl esters such as vinyl acetate, vinyl propionate, long-chain vinyl carboxylates such as vinyl ester of versatic acid (Veova 9 and 10, trade name from Shell Japan Co.); allylethers or methallylethers such as methyl(meth)allylether, butyl(meth)allylether and allyl(meth)allylether;

3

(meth)allylates such as (meth)allyl acetate and (meth)allyl butylate; crosslinking monomers having a plurality of unsaturated bonds in the molecule, such as divinyl benzene, ethylene glycol di(meth)acrylate and propylene glycol di(meth)allyl ether. The proportion thereof is 30 % by weight or less, preferably 25 % by weight or less, more preferably 10 % or less by weight based on the component (c).

In the above composition comprising monomers (a), (b) and (c), when the amount of diallyl phthalate (a) is less than 10 % by weight, the surface of the resulting coated film is of tackiness and inferior in solvent resistance, and therefore, it is not suitable for practical use. When the amount of diallyl phthalate (a) exceeds 40 % by weight, that is, when the amount of the acrylate ester (c) is decreased, the film forming properties are deteriorated. When the amount of hydroxyl group-containing vinyl monomer (b) is less than 0.1 % by weight, the effect of reaction with a crosslinking agent is lowered thus deteriorating solvent resistance. When its amount is more than 15 % by weight, the water resistance is deteriorated or the stability of the resulting emulsion is worsened, while the effect for improvement in solvent resistance becomes dull, thus resulting in an unfavorable balance among physical properties.

The crosslinked allyl copolymer fine particle-containing aqueous emulsion of the present invention can be produced by adding an emulsifier and a polymerization initiator to the above monomers (a), (b) and (c) in water (the concentration of the monomers (a), (b) and (c) in water is 5 to 60 % by weight) and then emulsion-polymerizing the mixture at a polymerization temperature of 40 to 100°C, preferably 50 to 90°C until the polymerization degree of diallyl phthalate reaches at least 85 %. For this reaction, the monomers may be first added in one portion or may be added gradually as the reaction proceeds. For this addition, the monomers may be added in the form of an emulsion prepared by emulsifying them with the emulsifier. The reaction is normally conducted under stirring, but a disper, a homogenizer, etc. may also be used in addition to a normal stirring method. The reaction can also be conducted with stirring or non-stirring under the condition of ultrasonic wave irradiation.

The polymerization degree of diallyl phthalate is preferably 90 % or more, more preferably 92 % or more, particularly 94 % or more. The gel fraction of the copolymer may be 88 % or more, particularly 90 % or more.

The average particle diameter of the crosslinked allyl copolymer fine particles contained in the emulsion of the present invention is preferably 200 nm or less in view of use thereof. When the average particle diameter exceeds 200 nm, gloss and luster are rendered insufficient. The average particle diameter may be particularly 150 nm or less, for example 100 nm or less.

The emulsion containing fine particles having an average particle diameter of 200 nm or less can be obtained by the emulsion polymerization using an emulsifier in an amount of 0.1 to 10 % by weight, preferably 0.5 to 7 % by weight, based on the total monomers. The emulsifier may be added in one portion at first or may be added in several portions as the reaction proceeds. When the amount of the emulsifier is less than 0.1 % by weight, agglomerates readily occur during polymerisation. Even if the amount exceeds 10 % by weight, no improvement in reaction stability is observed and on the contrary the water resistance of the resin is deteriorated.

The emulsifier used in the present invention includes cationic, anionic, nonionic, amphoteric, anion-nonion mixed and composite surfactants. Usually, the anionic, anion-nonion mixed or composite surfactant gives good results.

Examples of cationic surfactants include primary amine hydrochloride, secondary amine hydrochloride, tertiary amine hydrochloride and quaternary ammonium salt.

Examples of anionic surfactants include fatty acid salts, sulfate ester salts of higher alcohol, sulfate esters of liquid fatty oil, sulfate salts of aliphatic amines and aliphatic amides, phosphate esters of aliphatic alcohol, sulfonate salts of dibasic fatty acid esters, sulfonate salts of aliphatic amides, alkyl aryl sulfonate salts and formalin-condensated naphthalenesulfonate salts.

Examples of nonionic surfactants include polyoxyethylene alkyl ether, polyoxyethylene polyoxypropylene alkyl ether, polyoxyethylene aryl ether, polyoxyethylene polyoxypropylene aryl ether, polyoxyethylene alkyl aryl ether, polyoxyethylene polyoxypropylene alkyl aryl ether, polyoxyethylene alkyl ester, polyoxyethylene polyoxypropylene alkyl ester, sorbitan alkyl ester and polyoxyethylene sorbitan alkyl ester.

Examples of amphoteric surfactants include those of amino acid type, betaine type, sulfate ester type, sulfonate salt type and phosphate ester salt type.

The above enumerated anionic and nonionic surfactants may be suitably selected and mixed for use as the anion-nonion mixed surfactant. Examples of such anion-nonion composite surfactants include ammonium salts, sodium salts and potassium salts of sulfate or phosphate esters of nonionic surfactants such as polyoxyethylene alkyl aryl ethers, polyoxyethylene alkyl ethers, polyoxyethylene polyoxypropylene alkyl ethers, polyoxyethylene aryl ethers, polyoxyethylene polyoxypropylene aryl ethers, polyoxyethylene polyoxypropylene alkyl aryl ethers and the like.

A reactive emulsifier having a polymerizable double bond in one molecule may also used as the emulsifier in the present invention. Specific examples include Eleminol JS-2 and RS-30 (trade names of Sanyo Chemical Industries, Ltd.); Acuaron RN-20, RN-30, RN-50, HS-10, HS-20, HS-1025 and New Frontiers (trade names of Dai-ichi Kogyo Seiyaku Co., Ltd.); and Antox MS-60, RMA-1120 and RMA-500 series (trade names of Nippon Nyukazai Co., Ltd.).

The reactive emulsifiers may be used singly or in combination thereof or used in combination with an emulsifier other than the reactive emulsifier.

As the polymerization initiator used in the present invention, a water-soluble radical generator is preferable and examples include ammonium persulfate, potassium persulfate, sodium persulfate, hydrogen peroxide, water-soluble azo or redox polymerization initiators and the like.

Examples of such water-soluble azo polymerization initiators include hydrochlorides of azo compounds having an amino group and an imino group, such as 2,2-azobis(2-methyl-N-phenylpropionamidine)dihydrochloride, 2,2-azobis(N-(4-chlorophenyl)-2-methylpropionamidine)dihydrochloride, 2,2-azobis(2-methyl-N-(phenylmethyl)propionamidine)dihydrochloride and 2,2-azobis(2-methyl-N-(2-propenyl)propionamidine)dihydrochloride; and hydrochlorides of azo compounds having a cyclic amino group or imino group, such as 2,2-azobis(2-(5-methyl-2-imidazolin-2-yl)propane)dihydrochloride, 2,2-azobis(2-(2-imidazolin-2-yl)propane)dihydrochloride, 2,2-azobis(2-(4,5,6,7-tetrahydro-1H-1,3-diazepin-2-yl)propane)dihydrochloride and 2,2-azobis(2-(5-hydroxy-3,4,5,6-tetrahydropyrimidin-2-yl)propane)dihydrochloride.

Examples of redox polymerization initiators include a combination of potassium persulfate or ammonium persulfate with sodium hydrogensulfite, sodium metabisulfite, acidic sodium sulfite or Rongalite (sodium formaldehyde sulfoxylate dihydrate), a combination of an organic peroxide such as t-butyl hydroperoxide and cumene hydroperoxide with an acidic sodium sulfite or Rongalite. If necessary, a lipophilic peroxide such as benzoyl peroxide and tertiary butyl hydroperoxide, or a lipophilic azo compound such as 2,2'-azobisisobutyronitrile and 1,1'-azobis(cyclohexane-1-carbonitrile) can also be used as the initiator.

The amount of the polymerization initiator used is in the range of 0.05 to 5 % by weight based on the monomers, and may be added in one portion or added little by little.

For the production of the emulsion of the present invention, a part or all of carboxyl groups in the copolymer obtained by the copolymerization and acid groups formed as by-products by the decomposition of the polymerization initiator are preferably neutralized with a neutralizer.

Examples of such neutralizers include inorganic alkalis such as potassium hydroxide and sodium hydroxide; and amines such as ammonia, monomethylamine, dimethylamine, trimethylamine, monoethylamine, diethylamine, triethylamine, mono-n-propylamine, dimethyl-n-propylamine, monoethanolamine, diethanolamine, triethanolamine, N-methylethanolamine, N-aminoethylethanolamine, N-methyldiethanolamine, monoisopropanolamine, diisopropanolamine, triisopropanolamine and N,N-dimethylpropanolamine and 2-amino-2-methylpropanol, from which one or more neutralizers can be selected for use.

By crosslinking the above resulting emulsion by adding the crosslinking agent to it, the solvent resistance can be improved. This crosslinking is carried out where the hydroxyl group of the hydroxyl group-containing vinyl monomer introduced to the copolymer serves as a crosslinking site, but if any other reactive group is present, self-crosslink based on its reactivity, or another form of crosslinking with a crosslinking agent may also be used.

The above crosslinking agent has reactivity with the hydroxyl group, and examples include amino resins, crosslinking polyisocyanate compounds, blocked crosslinking polyisocyanate compounds and the like.

The amino resin is a thermosetting resin obtained by addition-reacting formaldehyde or paraformaldehyde to melamine, benzoguanamine, urea, etc., or is prepared by alkyl-etherifying a part or all of methylol groups of the thermosetting resin. Specific examples include melamineformaldehyde resins such as methylol melamine, methylated methylol melamine and butylated methylol melamine; guanamine-formaldehyde resins such as methylol benzoguanamine and butylated benzoguanamine; and urea-formaldehyde resins such as methylol urea, methylated methylol urea and butylated methylol urea.

The above blocked polyisocyanate compounds are those prepared by blocking isocyanate groups in the isocyanate compounds with a blocking agent. The isocyanate compound includes aromatic diisocyanate compounds such as m-, p-xylylene diisocyanate, 2,4- or 2,6-tolylenediisocyanate, m- or p-phenylenemethanediisocyanate and 4,4'-diphenylmethanediisocyanate; aliphatic or alicyclic diisocyanate compounds such as 4,4'-methylenebis(cyclohexylisocyanate), methylcyclohexane-2,4- (or -2,6-)diisocyanate, 1,3-di(isocyanatomethyl)cyclohexane, hexamethylenediisocyanate, isophoronediisocyanate and dimer acid diisocyanate, and adducts between the above diisocyanate compounds and polyols such as ethylene glycol and trimethylolpropane, as well as polymers of the above diisocyanate compounds and buret-type polyisocyanate compounds.

The blocking agent used for the isocyanate compounds includes volatile low molecular active hydrogen compounds. Specific examples of the blocking agent are aliphatic or aromatic monoalcohols such as methanol, ethanol, propanol, butanol, hexanol, cyclohexanol, benzyl alcohol, ethylene glycol monoethyl ether, and ethylene glycol monobutyl ether; halogen-substituted alcohols such as ethylene chlorohydrin and 1,3-dichloro-2-propanol; hydroxy tertiary amines such as dimethylaminoethanol and diethylaminoethanol; oximes such as acetoxime, methyl ethyl ketoxime and cyclohexanone oxime; active methylene compounds such as acetylacetone, acetoacetate ester and ethyl malonate; lactams such as ε-caprolactam; phenol derivatives such as phenol, t-butyl phenol, methyl p-hydroxybenzoate; other examples including aromatic amines, imides, mercaptan, imines, ureas, diaryl compounds and sodium sulfite. The reactivity of the blocked isocyanate may be regulated by arranging an alkyl group, polyoxyethylene or polyoxypropylene in the same molecule or in an aggregate containing 2 or more isocyanate groups, or by arranging an isocyanate group in the core of a particle. These blocked isocyanates used may be in any form of a liquid, a solid, an emulsion, etc.

The crosslinking polyisocyanates which can be used in the present invention include polyisocyanates blocked by chemical bonds as described above and those in which the reactivity of the isocyanate group is regulated by providing a hydrophilic or hydrophobic group around an isocyanate group. Examples of such compounds include Takenate ATH-400, NW-4 (2) or NW-4 (trade names, manufactured by Takeda Chemical Co., Ltd.) and Acuanate 200 or 210 (trade name, manufactured by Nippon Polyurethane Kogyo Co., Ltd.).

For the purpose of use capable of further short pot life, normal crosslinking isocyanate can be added as such or after dilution with a solvent, as disclosed in Japanese Patent Laid-Open Publication No. 83374/1988 or 157769/1996, the disclosure of which is incorporated herein by reference. The crosslinking isocyanate includes compounds containing 2 or more isocyanate groups in the molecule, such as toluene diisocyanate (TDI), hydrogenated TDI, xylylene diisocyanate, 1,3-bis(isocyanatomethyl)-cyclohexane, 1,3-bis($\alpha$,$\alpha$-dimethylisocyanatomethyl)benzene, trimethylolpropane (TMP)-TDI adduct, triphenylmethane triisocyanate (TPI), methylenebisphenyl diisocyanate (MDI) and polymers thereof, hydrogenated MDI and hexamethylene diisocyanate. The above diluent includes toluene, xylene, chlorinated paraffin, dioctyl phthalate and dibutyl phthalate.

As a special crosslinking form, a method of applying the emulsion of the present invention not containing a crosslinking agent onto the surface of substance A, then applying, onto substance B, a resin containing the above crosslinking polyisocyanate whose reactivity is regulated as described above or usual polyisocyanate, contact-bonding the coated surfaces of substances A and B, and if necessary heating for crosslinking and integrating them, is included in the scope of the present invention.

A curing accelerator may also be used at the time of crosslinking. Examples of curing accelerators include paratoluenesulfonic acid, dodecylbenzenesulfonic acid, phosphoric acid, a partial alkyl ester of phosphoric acid, oxalic acid, citric acid or a neutralized compound of these acids with ammonia, a primary amine, secondary amine or tertiary amine, or mono-, di- or trialkylphosphines, and inorganic salts such as ammonium chloride and ammonium nitrate. In addition, the accelerator for the blocked isocyanate includes known compounds of tin, zinc, and amine types. The amount of the curing accelerator used is suitably in the range of 0.1 to 10 % by weight based on the solid content of the emulsion.

The emulsion composition prepared by formulating the crosslinking agent into the emulsion of the present invention can be given the desired physical properties by thermal treatment thereof at 70 to 280°C, preferably 80 to 250°C. The crosslinking agent may be added as such or added in the form of an emulsion using an emulsifier. The amount of the crosslinking agent ranges from 1 to 45 parts by weight, preferably 2 to 35 parts by weight, based on 100 parts by weight of the solid content of the emulsion as the base. If the amount is less than 1 part by weight, the effect of solvent resistance is rendered insufficient, and if the amount exceeds 45 parts by weight, improvement in performance is not attained in proportion to its content, the resulting coated film itself becomes brittle, and flexibility, solvent resistance etc. become poor.

If necessary, additives may be added to the above emulsion composition. The additives used include pigments which are normally used in a paint, for example, inorganic pigments such as titanium dioxide, calcium carbonate, barium carbonate, kaolin, white lead, chrome yellow, red lead, strontium chromate, zinc chromate, titanium yellow, cadmium yellow, iron blue, ultramarine, talk, mica, barium sulfate, silica, titanium black, iron black, molybdenum red, molybdenum white and red oxide; and organic pigments such as red ocher anine. Other additives used include normal paint components, for example, film-forming agents, inorganic modifiers (e.g. colloidal silica and tetraethoxysilane), plasticizers, solvents, dispersants, tackifiers, gloss improvers, matting agents, antifoamers, preservatives, anti-fungus agents, mildewproofing agents, ultraviolet absorbers, antioxidants, foaming agents and flame retardants. A commercially available aqueous emulsion, paint and the like can also be blended.

The crosslinked allyl copolymer fine particle-containing aqueous emulsion obtained by the emulsion polymerization can be used as solid particles after drying. The drying method may be any method conventionally used in this technical field. For example, lyophilization and spray-dryer are used, and a method of coagulating and separating the emulsion by salting-out etc., followed by drying can also be used. Spray dryer is economically preferable. The average particle diameter of the resulting solid particle varies depending on the drying method, but those having the average particle diameter of 5 to 100 $\mu$m can be obtained in the present invention. The solid particle may be shaped into a pellet. These solid particles can be formulated in a thermoplastic resin, thermosetting resin, paint etc. and can be used as resin modifiers such as a shrinkage controller, a crosslinking agent, a tackifier, a thixotropic agent, a curing accelerator, a matting agent, a gloss agent and an organic fillers.

PREFERRED EMBODIMENTS OF THE INVENTION

Hereinafter, the present invention is described by way of Examples. In the Examples, "%" is on a weight basis. The numerical values in brackets of respective monomers indicate their proportions (% by weight) in the total amount of the components (a), (b) and (c).

Example 1

The following materials were introduced into a 1 L separable flask equipped with a stirrer, a thermometer, a condenser, a gas introducing inlet and a sampling inlet to prepare an aqueous emulsifier solution.

| | |
|---|---|
| Sodium dodecylbenzenesulfonate (manufactured by Dai-ichi Kogyo Seiyaku Co., Ltd., trade name: Neogen R) | 2.2 g |
| Water | 250 g |

Separately, emulsified monomers (1) and (2) having the following compositions were prepared.

| | | |
|---|---|---|
| (1) | Sodium dodecylbenzenesulfonate | 2.5 g |
| | Water | 90 g |
| | Diallyl orthophthalate (DAP) | 45 g (12.5 % monomer) |
| | Ethyl acrylate (EA) | 130.5 g (36.25 % monomer) |
| | 2-Hydroxyethyl methacrylate (HEMA) | |
| | | 1.8 g (0.5 % monomer) |
| (2) | Sodium dodecylbenzenesulfonate | 2.5 g |
| | Water | 90 g |
| | DAP | 45 g (12.5 % monomer) |
| | EA | 130.5 g (36.25 % monomer) |
| | HEMA | 7.2 g (2.0 % monomer) |

The internal temperature of the separable flask was raised at 70°C, and the atmosphere in the flask was sufficiently replaced by nitrogen under stirring at 300 rpm by a semicircular stirring blade. Then, 10 % of the prepared monomer (1) was introduced into the flask and an aqueous solution of ammonium persulfate (1.26 g) in water (10 g) was added to it. The mixture was reacted for 1 hour, and then the remainder (90 %) of the monomer (1) was gradually added over about 2 hours, followed by adding the emulsified monomer (2) for 2.5 hours (emulsion addition method). The polymerization was carried out at 70°C for 9 hours since the addition of the catalyst. The resulting emulsion had a solid content of 45 %, a polymerization degree (DAP) of 94.5 %, a polymerization degree (EA) of 100 %, an average particle diameter of 105 nm and a gel fraction of 97 %.

The polymerization degree was determined by measuring the amount of the residual DAP and EA by means of gas chromatography and calculation using the following equation.

$$\text{Polymerization degree (\%)} = (\text{(weight of charged monomer)} - \text{(weight of unreacted monomer)}) \, 100/(\text{weight of charged monomer})$$

The average particle diameter was measured using a laser particle diameter analyzing system PHOTON CORRELATOR LPA-3000 (manufactured by Ohtsuka Denshi Co., Ltd.)

Measurement of the gel fraction was carried out as follows:

A block-like solid (about 5 g) obtained by drying the emulsion in an oven at 80°C was removed as a sample and subjected to Soxhlet extraction with acetone as a solvent for 18 hours. The resulting filtration residue plus a small amount of precipitates obtained by subjecting the extract to ultracentrifugation were regarded as a gel content, and the gel fraction (%) was calculated according to the following equation:

Gel fraction (%) = (weight of gel content) 100/(weight of dried sample correction value)

In the above equation, the correction value is [1 - (percent by weight of unreacted DAP)], and the weight of the unreacted DAP was determined by gas chromatography.

Example 2

The following materials were introduced into a 1 L separable flask equipped with a stirrer, a thermometer, a condenser, a gas introducing inlet and a sampling inlet to prepare an aqueous emulsifier solution.

| Sodium dodecylbenzenesulfonate | 2.2 g |
|---|---|
| Water | 250 g |

Separately, an emulsified monomer having the following composition was prepared.

| Sodium dodecylbenzenesulfonate | 5.0 g |
|---|---|
| Water | 180 g |
| DAP | 54 g (15 % monomer) |
| EA | 297 g (82.5 % monomer) |
| HEMA | 9 g (2.5 % monomer) |

The internal temperature of the separable flask was raised at 70°C, and the atmosphere in the flask was sufficiently replaced by nitrogen under stirring at 300 rpm using a semicircular stirring blade. Then, 10 % of the prepared emulsified monomer was introduced into the flask and an aqueous solution of ammonium persulfate (1.26 g) in water (10 g) was added to it. The mixture was reacted for 1 hour, and then the remainder of the emulsified monomer was gradually added over 4.5 hours (emulsion addition method). Furthermore, the polymerization was carried out at 70°C for 9 hours since the addition of the catalyst. The resulting emulsion had a solid content of 45 %, a polymerization degree (DAP) of 94.7 %, a polymerization degree (EA) of 100 %, an average particle diameter of 101 nm and a gel fraction of 91 %.

Example 3

Emulsion polymerization was carried out using the same apparatus and aqueous emulsifier solution as in Example 2 in the same manner as in Example 2 except that an emulsified monomer having the following composition was used.

| Sodium dodecylbenzenesulfonate | 5.0 g |
|---|---|
| Water | 180 g |
| DAP | 126 g (35 % monomer) |
| EA | 225 g (62.5 % monomer) |
| HEMA | 9 g (2.5 % monomer) |

The resulting emulsion had a solid content of 45 %, a polymerization degree (DAP) of 92.4 %, a polymerization degree (EA) of 100 %, an average particle diameter of 121 nm and a gel fraction of 96 %.

Example 4

Emulsion polymerization was carried out using the same apparatus and aqueous emulsifier solution as in Example 1 in the same manner as in Example 1 except that emulsified monomers (1) and (2) having the following compositions were used.

| (1) | Sodium dodecylbenzenesulfonate | 2.5 g |
| | Water | 90 g |
| | DAP | 45 g (12.5 % monomer) |
| | Butyl acrylate (BA) | 130.5 g (36.25 % monomer) |
| | HEMA | 1.8 g (0.5 % monomer) |
| (2) | Sodium dodecylbenzenesulfonate | 2.5 g |
| | Water | 90 g |
| | DAP | 45 g (12.5 % monomer) |
| | BA | 130.5 g (36.25 % monomer) |
| | HEMA | 7.2 g (2.0 % monomer) |

The resulting emulsion had a solid content of 45 %, a polymerization degree (DAP) of 94.5 %, a polymerization degree (BA) of 100 %, an average particle diameter of 105 nm and a gel fraction of 92 %.

Example 5

Emulsion polymerization was carried out using the same apparatus and aqueous emulsifier solution as in Example 1 in the same manner as in Example 1 except that emulsified monomers (1) and (2) having the following compositions were used.

| (1) | Sodium dodecylbenzenesulfonate | 2.5 g |
| | Water | 90 g |
| | DAP | 45 g (12.5 % monomer) |
| | 2-Ethylhexyl acrylate (EtHA) | 130.5 g (36.25 % monomer) |
| | HEMA | 1.8 g (0.5 % monomer) |
| (2) | Sodium dodecylbenzenesulfonate | 2.5 g |
| | Water | 90 g |
| | DAP | 45 g (12.5 % monomer) |
| | EtHA | 130.5 g (36.25 % monomer) |
| | HEMA | 7.2 g (2.0 % monomer) |

The resulting emulsion had a solid content of 45 %, a polymerization degree (DAP) of 91.7 %, a polymerization degree (EtHA) of 100 %, an average particle diameter of 89 nm and a gel fraction of 98 %.

Example 6

Emulsion polymerization was carried out using the same apparatus as in Example 1 in the same manner as in Example 1 except that an aqueous emulsifier solution and emulsified monomers (1) and (2) having the following compositions and 0.72 g of ammonium persulfate were used.

| Aqueous emulsifier solution | | |
|---|---|---|
| | Sodium dodecylbenzenesulfonate | 3.2 g |
| | Water | 250 g |
| Emulsified monomers | | |
| (1) | Sodium dodecylbenzenesulfonate | 3.8 g |
| | Water | 90 g |
| | Diallyl terephthalate (DATP) | 45 g (12.5 % monomer) |
| | EA | 130.5 g (36.25 % monomer) |
| | HEMA | 1.8 g (0.5 % monomer) |
| (2) | Sodium dodecylbenzenesulfonate | 3.8 g |
| | Water | 90 g |
| | DATP | 45 g (12.5 % monomer) |
| | EA | 130.5 g (36.25 % monomer) |
| | HEMA | 7.2 g (2.0 % monomer) |

The resulting emulsion had a solid content of 45 %, a polymerization degree (DATP) of 92.8 %, a polymerization degree (EA) of 100 %, an average particle diameter of 95 nm and a gel fraction of 94 %.

Example 7

Emulsion polymerization was carried out using the same apparatus as in Example 1 in the same manner as in Example 1 except that the following aqueous emulsifier solution and emulsified monomers (1) and (2) having the following compositions were used.

| Aqueous emulsifier solution | | | |
|---|---|---|---|
| | Higher alcohol sulfate ester sodium salt (manufactured by Dai-ichi Kogyo Seiyaku Co., Ltd., trade name: Monogen Y-500) | | 1.4 g |
| | Water | | 250 g |
| Emulsified monomers | | | |
| (1) | Higher alcohol sulfate ester sodium salt | | 1.65 g |
| | Water | | 90 g |
| | DAP | | 45 g (12.5 % monomer) |
| | EA | | 129.6 g (36 % monomer) |
| | HEMA | | 1.8 g (0.5 % monomer) |
| (2) | Higher alcohol sulfate ester sodium salt | | 1.65 g |
| | Water | | 90 g |
| | DAP | | 45 g (12.5 % monomer) |
| | EA | | 129.6 g (36 % monomer) |
| | AA | | 1.8 g (0.5 % monomer) |
| | HEMA | | 7.2 g (2.0 % monomer) |

The resulting emulsion had a solid content of 45 %, a polymerization degree (DAP) of 91.5 %, a polymerization degree (EA) of 100 %, an average particle diameter of 125 nm and a gel fraction of 92 %.

Example 8

Emulsion polymerization was carried out using the same apparatus as in Example 1 in the same manner as in Example 1 except that the following aqueous emulsifier solution and emulsified monomers (1) and (2) having the following compositions were used.

| Aqueous emulsifier solution | | |
|---|---|---|
| | Polyoxyethylene alkyl ether sulfate ester ammonium salt (manufactured by Dai-ichi Kogyo Seiyaku Co., Ltd., trade name: Hi-tenol NE-05) | 2.2 g |
| | Water | 250 g |
| Emulsified monomers | | |
| (1) | Polyoxyethylene alkyl ether sulfate ester ammonium salt | 2.5 g |
| | Water | 90 g |
| | DAP | 45 g (12.5 % monomer) |
| | EA | 130.5 g (36.25 % monomer) |
| | 2-Hydroxyethyl acrylate (HEA) | 1.8 g (0.5 % monomer) |
| (2) | Polyoxyethylene alkyl ether sulfate ester ammonium salt | 2.5 g |
| | Water | 90 g |
| | DAP | 45 g (12.5 % monomer) |
| | EA | 130.5 g (36.25 % monomer) |
| | HEA | 7.2 g (2.0 % monomer) |

The resulting emulsion had a solid content of 45 %, a polymerization degree (DAP) of 94.5 %, a polymerization degree (EA) of 100 %, an average particle diameter of 119 nm and a gel fraction of 91 %.

Example 9

Emulsion polymerization was carried out using the same apparatus as in Example 2 in the same manner as in Example 2 except that the following aqueous emulsifier solution and an emulsified monomer having the following composition were used.

| Aqueous emulsifier solution | |
|---|---|
| Polyoxyethylene alkyl ether phosphate ester ammonium salt (manufactured by Dai-ichi Kogyo Seiyaku Co., Ltd., trade name: Plysurf M-208B) | 2.2 g |
| Water | 250 g |
| Emulsified monomer | |
| Polyoxyethylene alkyl ether phosphate ester ammonium salt | 5.0 g |
| Water | 180 g |
| DAP | 90 g (25 % monomer) |
| EA | 261 g (72.5 % monomer) |
| HEMA | 9 g (2.5 % monomer) |

The resulting emulsion had a solid content of 45 %, a polymerization degree (DAP) of 96.4 %, a polymerization degree (EA) of 100 %, an average particle diameter of 131 nm and a gel fraction of 97 %.

Example 10

Emulsion polymerization was carried out using the same apparatus as in Example 2 in the same manner as in Example 2 except that an aqueous emulsifier solution and an emulsified monomer each having the following composition were used.

| Aqueous emulsifier solution | |
|---|---|
| Sodium salt of dialkylsulfosuccinate ester (manufactured by Sanyo Chemical Industries, Ltd., trade name: Sanmolin OT-70) | 2.2 g |
| Water | 250 g |
| Emulsified monomer | |
| Sodium salt of dialkylsulfosuccinate ester | 5.0 g |
| Water | 180 g |
| DAP | 90 g (25 % monomer) |
| EA | 261 g (72.5 % monomer) |
| HEMA | 9 g (2.5 % monomer) |

The resulting emulsion had a solid content of 45 %, a polymerization degree (DAP) of 94.4 %, a polymerization degree (EA) of 100 %, an average particle diameter of 123 nm and a gel fraction of 92 %.

Example 11

Emulsion polymerization was carried out using the same apparatus as in Example 2 in the same manner as in Example 2 except that an aqueous emulsifier solution and an emulsified monomer each having the following composition and 0.72 g of ammonium persulfate were used.

| Aqueous emulsifier solution | |
|---|---|
| Sodium salt of higher alcohol sulfate ester | 2.2 g |
| Water | 250 g |
| Emulsified monomer | |
| Sodium salt of higher alcohol sulfate ester | 5.0 g |
| Water | 180 g |
| DATP | 90 g (25 % monomer) |
| EA | 261 g (72.5 % monomer) |
| HEMA | 9 g (2.5 % monomer) |

The resulting emulsion had a solid content of 45 %, a polymerization degree (DATP) of 96.0 %, a polymerization degree (EA) of 100 %, an average particle diameter of 99 nm and a gel fraction of 95 %.

Comparative Example 1

Emulsion polymerization was carried out using the same apparatus and aqueous emulsifier solution as in Example 2 in the same manner as in Example 2 except that an emulsified monomer having the following composition was used.

| Sodium dodecylbenzenesulfonate | 5.0 g |
| --- | --- |
| Water | 180 g |
| DAP | 18 g (5 % monomer) |
| EA | 333 g (92.5 % monomer) |
| HEMA | 9 g (2.5 % monomer) |

The resulting emulsion had a solid content of 45 %, a polymerization degree (DAP) of 97.5 %, a polymerization degree (EA) of 99.8 %, an average particle diameter of 97 nm and a gel fraction of 79 %.

Comparative Example 2

Emulsion polymerization was carried out using the same apparatus and aqueous emulsifier solution as in Example 1 in the same manner as in Example 1 except that emulsified monomers (1) and (2) having the following compositions were used.

| (1) | Sodium dodecylbenzenesulfonate | 2.5 g |
| --- | --- | --- |
| | Water | 90 g |
| | DAP | 90 g (25 % monomer) |
| | EA | 85.5 g (23.75 % monomer) |
| | HEMA | 1.8 g (0.5 % monomer) |
| (2) | Sodium dodecylbenzenesulfonate | 2.5 g |
| | Water | 90 g |
| | DAP | 90 g (25 % monomer) |
| | EA | 85.5 g (23.75 % monomer) |
| | HEMA | 7.2 g (2.0 % monomer) |

The resulting emulsion had a solid content of 45 %, a polymerization degree (DAP) of 90.5 %, a polymerization degree (EA) of 100 %, an average particle diameter of 147 nm and a gel fraction of 94 %.

Comparative Example 3

Emulsion polymerization was carried out using the same apparatus and aqueous emulsifier solution as in Example 1 in the same manner as in Example 1 except that emulsified monomers (1) and (2) having the following compositions and 0.54 g of ammonium persulfate were used.

| (1) | Sodium dodecylbenzenesulfonate | 2.5 g |
|---|---|---|
| | Water | 90 g |
| | DAP | 45 g (12.5 % monomer) |
| | EA | 101.7 g (28.25 % monomer) |
| | Acrylic acid (AA) | 0.9 g (0.25 % monomer) |
| | HEA | 13.0 g (3.6 % monomer) |
| (2) | Sodium dodecylbenzenesulfonate | 2.5 g |
| | Water | 90 g |
| | DAP | 45 g (12.5 % monomer) |
| | EA | 101.7 g (28.25 % monomer) |
| | AA | 0.9 g (0.25 % monomer) |
| | HEA | 51.8 g (14.4 % monomer) |

The resulting emulsion had a solid content of 45 %, a polymerization degree (DAP) of 91.7 %, a polymerization degree (EA) of 100 %, an average particle diameter of 121 nm and a gel fraction of 92 %.

Comparative Example 4

Emulsion polymerization was carried out using the same apparatus and aqueous emulsifier solution as in Example 1 in the same manner as in Example 1 except that emulsified monomers (1) and (2) having the following compositions were used.

| (1) | Sodium dodecylbenzenesulfonate | 2.5 g |
|---|---|---|
| | Water | 90 g |
| | DAP | 45 g (12.5 % monomer) |
| | Methyl methacrylate (MMA) | 129.6 g (36 % monomer) |
| | AA | 0.9 g (0.25 % monomer) |
| | HEMA | 1.8 g (0.5 % monomer) |
| (2) | Sodium dodecylbenzenesulfonate | 2.5 g |
| | Water | 90 g |
| | DAP | 45 g (12.5 % monomer) |
| | MMA | 129.6 g (36 % monomer) |
| | AA | 0.9 g (0.25 % monomer) |
| | HEMA | 7.2 g (2.0 % monomer) |

The resulting emulsion had a solid content of 45 %, a polymerization degree (DAP) of 92.5 %, a polymerization degree (MMA) of 100 %, an average particle diameter of 107 nm and a gel fraction of 96 %.

The results of the emulsions obtained in Examples 1 to 11 and Comparative Examples 1 to 4 are shown in Table 1. In Table 1, EA means ethyl acrylate; BA, butyl acrylate; 2-EtHA, 2-ethylhexyl acrylate; MMA, methyl methacrylate; DAP, diallyl orthophthalate; DATP, diallyl terephthalate; AA, acrylic acid; HEMA, 2-hydroxyethyl methacrylate; and HEA, 2-hydroxyethyl acrylate.

For the emulsifiers in Table 1, (1) means alkylaryl sulfonate salt; (2), salt of higher alcohol sulfonate ester; (3), salt of polyoxyethylene alkyl ether sulfonate ester; (4), salt of polyoxyethylene alkyl ether phosphate ester; and (5), sulfonate salt of dibasic fatty acid ester. The numerical values in items OH and COOH in the addition method in Table 1 indicate the contents by weight of the hydroxyl group-containing vinyl monomer and acrylic acid (AA) respectively in the emulsified monomers (1) and (2).

A crosslinking agent was mixed in an amount shown in Table 2 with the emulsions obtained in Examples 1 to 11 and Comparative Examples 1 to 4 to prepare emulsion compositions respectively. A zinc phosphate-treated steel plate (70 mm x 150 mm x 0.3 mm) having an epoxy primer applied on it in a thickness of 2 to 5 $\mu$ was coated by a bar coater with each composition so that the thickness of the resulting film was about 15 $\mu$. After drying at 80°C for 10 minutes, it was baked at 150°C for 15 minutes to obtain a coated steel plate.

The crosslinking agents used were a melamine resin (completely alkylated methylated resin, trade name "Saimel 303" manufactured by Mitsui Cytec Co., Ltd.), blocked isocyanate compound A (isocyanate prepolymer methyl ethyl ketone oxime blocked material "PB-11", Meiwa Kagaku Kogyo Co., Ltd.), and blocked isocyanate compound B (water-dispersible polyisocyanate (hexamethylenediisocyanate type) "Takanate NW-4 (2)", manufactured by Takeda Chemical Industries, Ltd.).

The coated steel plates thus obtained were evaluated for their coating physical properties. The results are shown in Table 2.

Evaluation in each measurement item was carried out according to the following method.

(1) With respect to film forming properties, the following 3-level evaluation in 3 items for the coated steel plate was carried out according to the following criteria.

Crack

Good:    No crack is observed.
Fair:    Slight clacks are observed.
Bad:     A large number of clacks are observed.

Tackiness

Good:    No tackiness is felt even when the plate is pressed strongly with a finger.
Fair:    Slight tackiness is felt when the plate is pressed strongly with a finger.
Bad:     Tackiness is felt even when the plate is pressed gently with a finger.

(2) Pencil hardness was judged according to JIS K 5400.
(3) Flex resistance
Flex resistance was judged by folding the coated steel plate at an angle of 180 degrees using a vise and observing occurrence of a crack at the folded portion under a 10x magnifier. "nT" means that no crack occurs when the plate was folded after interposing "n" plates having the same thickness into the folding portion. A smaller numerical value indicates better processability.
(4) Stain Resistance
Stain resistance was judged by coloring the coated surface of the coated steel plate by use of a red or black felt-tip pen, wiping off the ink after 24 hours with a gauze impregnated with ethanol, and observing the degree of coloring on it. The results are expressed as follows.

Good:    Good (no ink trace)
Fair:    Slightly good
Bad:     Poor (ink trace apparently remains)

(5) Solvent Resistance
Solvent resistance was judged by rubbing the film on the plate with a gauze impregnated with toluene under a load of 3 kg and then determining the number of times it was rubbed until the substrate was exposed.

EP 0 953 601 A1

## Table 1

| | Example No. | | | | | | | | | | |
|---|---|---|---|---|---|---|---|---|---|---|---|
| | 1 | 2 | 3 | 4 | 5 | 6 | 7 | 8 | 9 | 10 | 11 |
| Monomer (% by weight) | | | | | | | | | | | |
| EA | 72.5 | 82.5 | 62.5 | | | 72.5 | 72.5 | 72.5 | 72.5 | 72.5 | 72.5 |
| BA | | | | 72.5 | | | | | | | |
| 2-EtHA | | | | | 72.5 | | | | | | |
| MMA | | | | | | | | | | | |
| DAP | 25 | 15 | 35 | 25 | 25 | | 25 | 25 | 25 | 25 | |
| DATP | | | | | | 25 | | | | | 25 |
| AA | | | | | | | | | | | |
| HEA | | | | | | | | 2.5 | | | |
| HEMA | 2.5 | 2.5 | 2.5 | 2.5 | 2.5 | 2.5 | 2.5 | | 2.5 | 2.5 | 2.5 |
| Emulsifier species | Anionic emulsifier (1) | Anionic emulsifier (1) | Anionic emulsifier (1) | Anionic emulsifier (1) | Anionic emulsifier (1) | Anionic emulsifier (1) | Anionic emulsifier (2) | Nonionic-anionic composite emulsifier (3) | Nonionic-anionic composite emulsifier (4) | Anionic emulsifier (5) | Anionic emulsifier (5) |
| Amount of emulsifier (% by weight) | 2.0 | 2.0 | 2.0 | 2.0 | 2.0 | 3.0 | 1.3 | 2.0 | 2.0 | 2.0 | 2.0 |
| Amount of initiator (% by weight) | 0.35 | 0.35 | 0.35 | 0.35 | 0.35 | 0.20 | 0.35 | 0.35 | 0.35 | 0.35 | 0.20 |
| Addition method OH | 1:4 | Altogether | Altogether | 1:4 | 1:4 | 1:4 | 1:4 | 1:4 | Altogether | Altogether | Altogether |
| COOH | - | - | - | - | - | - | - | - | - | - | - |
| Emulsion concentration (% by weight) | 45 | 45 | 45 | 45 | 45 | 45 | 45 | 45 | 45 | 45 | 45 |
| Polymerization degree (%) | 94.5 | 94.7 | 92.4 | 94.5 | 91.7 | 92.8 | 91.5 | 94.5 | 96.4 | 94.4 | 96.0 |
| Particle diameter (nm) | 105 | 101 | 121 | 105 | 89 | 95 | 125 | 119 | 131 | 123 | 99 |
| Gel fraction (% by weight) | 97 | 91 | 96 | 92 | 98 | 94 | 92 | 91 | 97 | 92 | 95 |

17

Table 1 (continued)

| | Comparative Example No. | | | |
|---|---|---|---|---|
| | 1 | 2 | 3 | 4 |
| Monomer (% by weight) | | | | |
| EA | 92.5 | 47.5 | 59.5 | |
| BA | | | | |
| 2-EtHA | | | | |
| MMA | | | | 72 |
| DAP | 5 | 50 | 25 | 25 |
| DATP | | | | |
| AA | | | 0.5 | 0.5 |
| HEA | | | 18 | |
| HEMA | 2.5 | 2.5 | | 2.5 |
| Emulsifier species | Anionic emulsifier (1) | Anionic emulsifier (1) | Anionic emulsifier (1) | Anionic emulsifier (1) |
| Amount of emulsifier (% by weight) | 2.0 | 2.0 | 2.0 | 2.0 |
| Amount of Initiator (% by weight) | 0.35 | 0.35 | 0.15 | 0.35 |
| Addition method OH | Altogether | 1:4 | 1:4 | 1:4 |
| COOH | - | - | 1:1 | 1:1 |
| Emulsion concentration (% by weight) | 45 | 45 | 45 | 45 |
| Polymerization degree (%) | 97.5 | 90.5 | 91.7 | 92.5 |
| Particle diameter (nm) | 97 | 147 | 121 | 107 |
| Gel fraction (% by weight) | 79 | 94 | 92 | 96 |

Table 2

| | Example No. | | | | | | | | | | |
|---|---|---|---|---|---|---|---|---|---|---|---|
| | 12 | 13 | 14 | 15 | 16 | 17 | 18 | 19 | 20 | 21 | 22 |
| Formulation (parts by weight) | | | | | | | | | | | |
| Used emulsion | Example No. 1 | Example No. 2 | Example No. 3 | Example No. 4 | Example No. 5 | Example No. 6 | Example No. 7 | Example No. 8 | Example No. 9 | Example No. 10 | Example No. 11 |
| Amount of emulsion | 100 | 100 | 100 | 100 | 100 | 100 | 100 | 100 | 100 | 100 | 100 |
| Melamine resin | 10 | | 5 | | | | | 10 | 30 | | |
| Isocyanate compound A | | | | 13 | 13 | 13 | | 13 | | | 13 |
| B | | 10 | | | | | | | | 10 | |
| Film forming properties Crack | Good | Good | Good | Good | Good | Good | Good | Good | Good | Good | Good |
| Tackiness | Good | Good | Good | Good | Good | Good | Good | Good | Good | Good | Good |
| Pencil hardness | 3H | 2H | 4H | 3H | 2H | 4H | 3H | 3H | 3H | 3H | 4H |
| Flex resistance | 4T | 3T | 4T | 3T | 3T | 3T | 4T | 3T | 6T | 3T | 3T |
| Stain resistance Red felt-tip pen | Good | Good | Good | Good | Good | Good | Good | Good | Good | Good | Good |
| Black felt-tip pen | Good | Good | Good | Good | Good | Good | Good | Good | Good | Good | Good |
| Solvent resistance Toluene | 320 | 300 | 300 | 450 | 400 | 500< | 350 | 500< | 500< | 350 | 500< |

EP 0 953 601 A1

19

Table 2 (Continued)

| | Comparative Example No. | | | |
| --- | --- | --- | --- | --- |
| | 5 | 6 | 7 | 8 |
| Formulation (parts by weight) | | | | |
| Used emulsion | Comparative Example No. 1 | Comparative Example No. 2 | Comparative Example No. 3 | Comparative Example No. 4 |
| Amount of emulsion | 100 | 100 | 100 | 100 |
| Melamine resin | 10 | 10 | | |
| Isocyanate compound A | | | | 13 |
| B | | | 20 | |
| Film forming properties Crack | Good | Bad | Fair | Bad |
| Tackiness | Fair | - | Good | - |
| Pencil hardness | H | - | 3H | - |
| Flex resistance | 3T | - | 8T | - |
| Stain resistance Red felt-tip pen | Fair | - | Good | - |
| Black felt-tip pen | Good | - | Good | - |
| Solvent resistance Toluene | 50 | - | 400 | - |

As is evident from Table 2, the emulsion compositions prepared by formulating the crosslinking agent in the emulsion of the present invention demonstrate excellent performance with respect to any of film forming properties, pencil hardness, flex resistance, stain resistance and solvent resistance. On the other hand, the emulsion composition of Comparative Example 1 wherein the diallyl phthalate monomer (i.e. 5 % by weight) is smaller than that of the present invention is inferior in tackiness and is also evidently inferior in solvent resistance to the present invention. Since the emulsion composition of Comparative Example 2 wherein the amount of the diallyl phthalate monomer (50 % by weight) is larger than that of the present invention indicates a large number of cracks and is thus inferior in film forming properties, so its solvent resistance was not evaluated,

The emulsion composition of Comparative Example 3 wherein the amount of the hydroxyl group-containing vinyl monomer (i.e. 18 % by weight) is larger than that of the present invention indicates no improvement in solvent resistance, and its film forming properties are also deteriorated.

The emulsion composition of Comparative Example 4 wherein the methacrylate ester is used in place of the acrylate ester indicates considerable occurrence of cracks and has no film forming properties.

Example 23

The emulsion (10 g) obtained in Example 1 was lyophilized for 60 hours to give 4.5 g of white powder. This powder was about 30 μm in average particle diameter.

EFFECT OF THE INVENTION

The crosslinked allyl copolymer fine particle-containing aqueous emulsion of the present invention can be used in a paint, a coating material, an adhesive, a printing ink, a paper processing and a fiber processing and is useful as a functional material because of its excellent film forming properties in spite of a polymerization degree of diallyl phthalate of at least 85 %.

## Claims

1. A crosslinked allyl copolymer fine particle-containing aqueous emulsion having an average particle diameter of at most 200 nm, which is obtained by emulsion-copolymerizing a monomer comprising (a) 10 to 40 % by weight of diallyl phthalate, (b) 0.1 to 15 % by weight of a hydroxyl group-containing vinyl monomer and (c) a balance of an acrylate ester of a monohydric alcohol having 1 to 8 carbon atoms until the polymerization degree of diallyl phthalate (a) reaches at least 85 %.

2. The crosslinked allyl copolymer fine particle-containing aqueous emulsion according to claim 1, wherein diallyl phthalate (a) is a monomer selected from diallyl orthophthalate, diallyl isophthalate and diallyl terephthalate.

3. The crosslinked ally copolymer fine particle-containing aqueous emulsion according to claim 1 or 2, wherein the hydroxyl group-containing vinyl monomer (b) is an acrylate or methacrylate ester of a dihydric or more alcohol.

4. The crosslinked allyl copolymer fine particle-containing aqueous emulsion according to claim 3, wherein the acrylate or methacrylate ester of a dihydric or more alcohol is a monomer selected from 2-hydroxyethyl acrylate, 2-hydroxypropyl acrylate, 2-hydroxyethyl methacrylate, 2-hydroxypropyl methacrylate, 3-hydroxypropyl acrylate, 3-hydroxypropyl methacrylate, 2-hydroxybutyl acrylate, 2-hydroxybutyl methacrylate, 4-hydroxybutyl acrylate and 4-hydroxybutyl methacrylate.

5. The crosslinked allyl copolymer fine particle-containing aqueous emulsion according to claim 1 or 2, wherein the hydroxyl group-containing vinyl monomer (b) is allyl alcohol or methallyl alcohol.

6. The crosslinked allyl copolymer fine particle-containing aqueous emulsion according to any one of claims 1 to 5, wherein acrylate ester (c) is a monomer selected from methyl acrylate, ethyl acrylate, propyl acrylate, isopropyl acrylate, butyl acrylate, isobutyl acrylate, 2-ethylhexyl acrylate and octyl acrylate.

7. An emulsion composition comprising a crosslinking agent capable of reacting with a hydroxyl group, and the emulsion according to any one of claims 1 to 6.

8. The emulsion composition according to claim 7, wherein the crosslinking agent is an amino resin, a crosslinking isocyanate compound or a blocked isocyanate compound.

9. An allyl crosslinked copolymer particle obtained by drying the emulsion according to any one of claims 1 to 6.

10. A film formed on a substrate, prepared by coating the substrate with the emulsion according to any one of claims 1 to 6 and drying it.

11. A method of preparing a crosslinked film on a substrate, which comprises coating the substrate with the emulsion composition according to claim 7 or 8, drying and crosslinking it.

## INTERNATIONAL SEARCH REPORT

International application No.

PCT/JP98/00099

| A. CLASSIFICATION OF SUBJECT MATTER |
|---|
| Int.Cl⁶ C08L33/06, C08F220/12, 218/18, C09D133/06 |

According to International Patent Classification (IPC) or to both national classification and IPC

| B. FIELDS SEARCHED |
|---|
| Minimum documentation searched (classification system followed by classification symbols)<br>Int.Cl⁶ C08L33/06-33/14, C08F220/12-220/18, 20/12-20/18, 218/18, 18/18, C09D133/06-133/14 |

Documentation searched other than minimum documentation to the extent that such documents are included in the fields searched

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP, 50-21083, A (Osaka Soda Co., Ltd.), March 6, 1975 (06. 03. 75), Claims ; page 1, lower right column, lines 2 to 11 ; page 2, upper left column, lines 8 to 15 ; upper right column, 2nd line from the bottom to lower right column, line 13 ; page 3, upper left column, line 3 to lower right column, line 3 ; page 4, upper right column, 4th line from the bottom to lower left column, line 10 (Family: none) | 1, 2, 6-11 |
| A | JP, 60-192718, A (Dainippon Ink & Chemicals, Inc.), October 1, 1985 (01. 10. 85), Claims ; page 2, upper right column, line 9 to lower left column, line 10 ; page 5, upper left column, line 5 to upper right column, line 9 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>April 1, 1998 (01. 04. 98) | Date of mailing of the international search report<br>April 14, 1998 (14. 04. 98) |
|---|---|
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP98/00099 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP, 7-57861, B (Showa Highpolymer Co., Ltd.), June 21, 1995 (21. 06. 95), Claims (Family: none) | 1-11 |
| A | JP, 52-50072, B (Osaka Soda Co., Ltd.), December 21, 1977 (21. 12. 77), Claims ; column 9, lines 21 to 27 ; column 10, line 23 to column 11, line 2 ; column 13, line 33 to column 14, line 5 ; page 10, Table 1 (Family: none) | 1-11 |
| P | JP, 9-31433, A (Mitsui Toatsu Chemicals, Inc.), February 4, 1997 (04. 02. 97), Claims 1, 2 ; Par. Nos. [0006] to [0010] (Family: none) | 1-11 |
| E | JP, 10-72510, A (Daiso Co., Ltd.), March 17, 1998 (17. 03. 98), Claims 1 to 9 ; Par. No. [0011] (Family: none) | 1-11 |